# EUROPEAN PATENT SPECIFICATION

(11) **EP 2 821 282 B1**
(45) Date of publication and mention of the grant of the patent: **08.05.2019**
(21) Application number: 14175453.1
(22) Date of filing: 02.07.2014
(51) Int. Cl.: B60Q 1/08, B60Q 1/14, F21K 99/00, F21S 41/19, F21S 41/143, F21S 41/663

(54) **LIGHT SOURCE APPARATUS, VEHICLE HEADLAMP AND VEHICLE HEADLAMP SYSTEM**
LICHTQUELLENVORRICHTUNG, FAHRZEUGSCHEINWERFER UND FAHRZEUGSCHEINWERFERSYSTEM
APPAREIL DE SOURCE LUMINEUSE, PHARE DE VÉHICULE ET SYSTÈME DE PHARE DE VÉHICULE

(30) Priority: 03.07.2013 JP 2013140065
(43) Date of publication of application: 07.01.2015
(73) Proprietor: Stanley Electric Co., Ltd., Meguro-ku Tokyo 153-8636 (JP)
(72) Inventor: Sekiguchi, Tatsuya, Tokyo, 153-8636 (JP); Kaizumi, Yasuaki, Tokyo, 153-8636 (JP); Matsuzaki, Makio, Tokyo, 153-8636 (JP)
(74) Representative: Emde, Eric

(56) References cited:
- EP-A1- 2 826 667
- EP-A2- 2 085 688
- EP-A2- 2 306 075
- WO-A1-2012/156121
- DE-A1-102008 036 193
- DE-A1-102008 044 968

## Description

### BACKGROUND OF THE INVENTION

### Field of the Invention

The present invention relates to a light distribution control technique that controls a light irradiation range per subsection when light is irradiated in front of a vehicle.

### Description of the Background Art

When driving a vehicle at night, a driver basically checks the area in front of the vehicle by irradiating a high beam from the headlamps, switching to a low beam as necessary, but also often uses the low beam due to the hassle of switching as well as the road environment. Hence, light is irradiated on the upper side above a so-called cutoff line, possibly casting glare onto an oncoming vehicle or preceding vehicle (hereinafter referred to as "forward vehicle"). Thus, as disclosed in Japanese Patent No. JP 4624257 B for example, in recent years there have been proposed various light distribution control techniques for detecting the position of the lamps (tail lamps or headlamps) of the forward vehicle using an image obtained by taking an image of the forward vehicle by a camera mounted to the subject vehicle, and controlling the irradiation pattern of the high beam to ensure that the position of the forward vehicle is within a shaded range. Such a light distribution control technique is also called ADB (Adaptive Driving Beam) control. This type of control suppresses the glare cast on a forward vehicle and contributes to the improvement of early detection of pedestrians as well as distance visibility.

As an example of a vehicle headlamp used for the ADB control described above, there is known a vehicle headlamp that combines an LED array in which a plurality of light-emitting devices (light-emitting diodes) is arranged in a matrix shape and a projection lens that projects the light emitted from this LED array (refer to Japanese Patent Laid-Open No. JP 2010-40528 A). According to such a vehicle headlamp, the respective light-emitting diodes are selectively turned on, making it possible to control the light irradiation range or shaded range in accordance with a position of a forward vehicle at higher resolution.

However, according to the ADB system of the precedent example described above, the number of light-emitting devices included in the LED array is preferably further increased to further enhance the resolution of the controllable light-irradiation range or shaded range.

DE 10 2008 044968 A1 discloses a device which has light sources arranged on a light surface. A part of the light sources is LEDs, which form a LED field consisting of lines of LEDS that are arranged linearly next to each other. A dual spacing of adjacent light sources in boundary areas of the light surface is larger than in a central area of the light surface. The light sources in the boundary areas beside the LED field are controlled independently of the LEDs of the LED field. Optical imaging elements are arranged downstream of the light sources in the boundary areas in a radiation path.

WO 2012/156121 A1 discloses an optoelectronic semiconductor module, comprising a plurality of light-emitting areas when in operation, wherein at least two abutting lateral edges of at least one light-emitting area are arranged at an angle of more than 0° and less than 90° to each other. Also disclosed is a display having a plurality of such modules.

EP 2 085 688 A2 discloses an automotive headlamp apparatus with a light source for producing a high beam and a controller for controlling illumination from the light source. Given that at least a portion of a high beam illumination area illuminated by the light source is vertically divided into a plurality of blocks, the controller controls illumination from the light source such that a plurality of first regions having a predetermined horizontal width are formed at least in some of the blocks toward the bottom, and that a second region having a greater horizontal width than the first regions is formed in the block toward the top.

EP 2 306 075 A2 discloses a headlight which has a light module comprising a matrix-like arrangement of semiconductor sources i.e. LEDs, a primary lens and a secondary lens. Light emission regions comprising light emission surfaces, which differentiate middle rows in the form of light emission surfaces of adjacent rows. A middle light emission region of the middle rows is separated from the adjacent light emission regions of the middle rows by two V-shaped edges during reflection by the secondary lens. The edges are tapered together.

Nevertheless, the driving apparatus for selectively turning on these light-emitting devices increases in complexity in proportion to the increase in the number of light-emitting devices, causing inconvenience.

### SUMMARY OF THE INVENTION

It is therefore an object of the present invention to provide a technique capable of reducing the number of required light-emitting devices while sufficiently maintaining the needed resolution of the irradiation range or shaded range of the ADB system.

The light source apparatus of the present invention is a light source apparatus incorporated and used in a vehicle headlamp, as set forth in claim 1. Preferred embodiments of the present invention may be gathered from the dependent claims.

According to the configuration described above, the number, surface area, and the like of the light-emitting devices respectively included in the adjacent light-emitting device arrays are set differently and thus, by projecting the light emitted from these light-emitting devices by a lens, it is possible to achieve selective light irradiation by the light-emitting device arrays wherein the surface area and the like of the light-emitting units of the respective light-emitting devices are small in a region where light irradiation control at a high resolution is desired, and achieve selective light irradiation by the light-emitting device arrays where the surface area of the light-emitting units of the respective light-emitting devices is larger in a region where high resolution is not necessarily required in achieving the ADB function. As a result, the number of light-emitting devices can be reduced while maintaining the required resolution for light irradiation control, making it possible to simplify the configuration of the apparatus that drives this matrix LED.

Additionally, in the light source apparatus described above, among the respective light-emitting devices of the first light-emitting device array, the surface area and/or width in the first direction of the light-emitting units of the light-emitting devices of one end and/or the other end in the first direction are preferably set larger than the surface area and/or width in the first direction of the other respective light-emitting devices.

The light from the light-emitting devices of one end and the other end is projected by the lens and irradiated on the left end or the right end of the area in front of the vehicle, and thus the required resolution for this light may conceivably be lower than that of the light irradiated in the center area in front of the vehicle. Accordingly, the number of light-emitting devices can be further reduced by increasing the surface area and the like of the light-emitting units of the light-emitting devices of one end and the other end.

In the light source apparatus described above, all of the widths in the second direction of the respective light-emitting devices of the first light-emitting device array may be the same.

With this arrangement, it is possible to avoid the occurrence of a region that does not contribute to light emission between the first light-emitting device array and an adjacent other light-emitting device array, to the extent possible.

Additionally, in the light source apparatus described above, among the plurality of light-emitting device arrays, the surface area and/or width in the first direction of the respective light-emitting units of the respective light-emitting devices of the second light-emitting device array are set larger than the surface area and/or width in the first direction of the respective light-emitting units of a third light-emitting device array adjacent to the second light-emitting device array.

With this arrangement, it is possible to achieve light irradiation at a higher resolution in a region where fine light irradiation control is desired.

Additionally, in the light source apparatus described above, the respective light-emitting devices of the second light-emitting device array and the respective light-emitting devices of the third light-emitting device array are the same in width in the first direction while different in width in the second direction.

Additionally, in the light source apparatus described above, the respective light-emitting devices of a fourth light-emitting device array on the other end side in the second direction among the plurality of light-emitting device arrays preferably comprise an outer edge shape that includes an edge that obliquely crosses the first direction.

With this arrangement, it is possible to vary the step area of this cutoff line by making the light from this fourth light-emitting device array correspond to the cutoff line, for example, and achieve a so-called AFS function as well.

The vehicle headlamp of an aspect according to the present invention is a vehicle headlamp comprising the light source apparatus described above and a lens that projects the light emitted from this light source apparatus.

According to the above configuration, while sufficiently maintaining the needed resolution of the irradiation range or shaded range of the ADB system, a vehicle headlamp capable of reducing the number of required light-emitting devices is provided.

The vehicle headlamp system of the present invention is a vehicle headlamp system that comprises the vehicle headlamp described above and a lighting control unit that controls the vehicle headlamp, wherein the lighting control unit comprises: (a) a detecting unit that detects a position of a forward vehicle based on an image of the area in front of the vehicle taken by a camera, (b) a light irradiation range setting unit that sets the region that includes the forward vehicle as a light non-irradiation range and all other regions as a light irradiation range, based on the position of the forward vehicle, and (c) a light distribution control unit that generates a control signal in accordance with the light irradiation range and the light non-irradiation range set by the light irradiation range setting unit, and outputs the control signal to the vehicle headlamp.

According to the above configuration, while sufficiently maintaining the needed resolution of the irradiation range or shaded range of the ADB system, a vehicle headlamp capable of reducing the number of required light-emitting devices is provided.

### BRIEF DESCRIPTION OF THE DRAWINGS

Fig. 1A is a plan view schematically showing the configuration of a matrix LED as the light source apparatus of an embodiment.
Fig. 1B is a plan view showing a portion of the matrix LED of Fig. 1A, enlarged.
Fig. 2 is a schematic cross-sectional view showing a configuration example of the light-emitting devices included in the matrix LED.
Fig. 3A is a schematic view showing a configuration example of the lamp unit.
Fig. 3B is a schematic view showing the optical configuration of the lamp unit disclosed in Fig. 3A.
Fig. 4 is a block diagram showing the configuration of a vehicle headlamp system of an embodiment.
Fig. 5A and Fig. 5B are figures for explaining an example of a light distribution pattern formed by the vehicle headlamp system described in the specification.
Fig. 6A and Fig. 6B are figures for explaining another example of a light distribution pattern formed by the vehicle headlamp system described in the specification.
Fig. 7A and Fig. 7B are figures for explaining another example of a light distribution pattern formed by the vehicle headlamp system described in the specification.

### DESCRIPTION OF THE PREFERRED EMBODIMENTS

Now, an embodiment of the present invention will be described below with reference to the accompanying drawings.

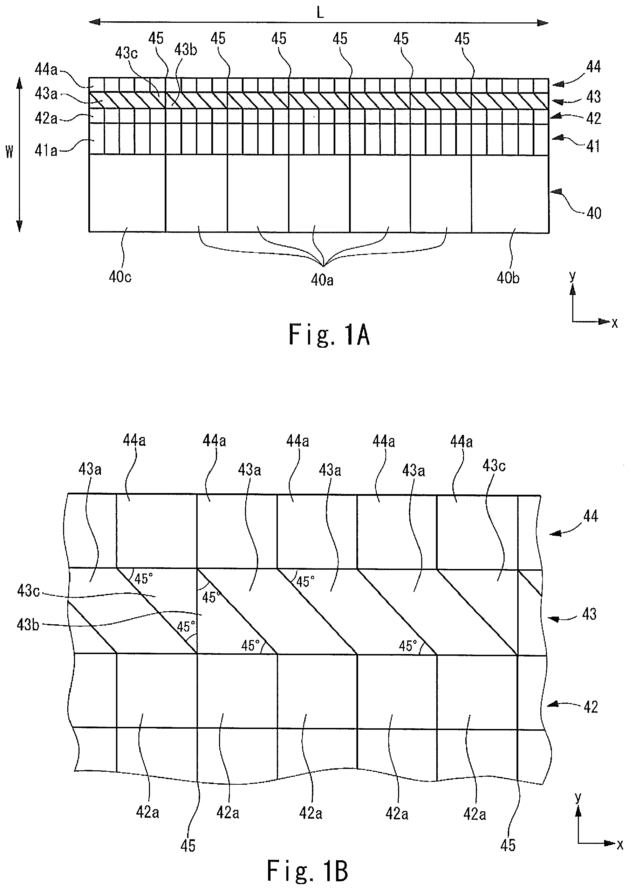

Fig. 1A is a plan view schematically showing the configuration of a matrix LED as the light source apparatus of an embodiment. The matrix LED in the figure is configured to comprise a plurality of light-emitting devices (LEDs) arranged with regularity. Fig. 1A mainly shows the shapes of the light-emitting units of the respective light-emitting devices. The matrix LED in the figure comprises a plurality of light-emitting device arrays 40, 41, 42, 43, and 44. The respective light-emitting device arrays 40 and the like each comprise a plurality of light-emitting devices arranged in a first direction (direction x in the figure). As shown in the figure, the light-emitting units (light-emitting surfaces) of the respective light-emitting devices comprise various sizes and shapes. The matrix LED is rectangular in shape overall, with a long-side length L of 9 mm and a short-side length W of 3 mm, for example.

The light-emitting device array 40 comprises seven light-emitting devices arranged in the first direction. Specifically, the light-emitting device array 40 comprises five light-emitting devices 40a adjacently arranged, one light-emitting device 40b adjacently arranged to one end side of the row made of the five light-emitting devices 40a, and one light-emitting device 40c adjacently arranged to the other end side of the row made of the five light-emitting devices 40a. The five light-emitting devices 40a are mutually equal in shape, surface area, and short-side length (width). Conversely, the respective light-emitting devices 40b and 40c are nearly square in shape, with a wider long-side length than that of the respective light-emitting devices 40a. The light-emitting device 40b and the light-emitting device 40c are mutually equal in shape, long-side length, short-side length (width), and surface area. Note that the number of divisions is not limited to the above since the light-emitting device array 40 only needs to be divided into a plurality with respect to the long side of the matrix LED.

The light-emitting device array 41 comprises 30 light-emitting devices 41a arranged in the first direction. In the figure, only one light-emitting device 41a is representatively denoted with a reference numeral. These 30 light-emitting devices 41a are mutually equal in shape and surface area yet differ in shape and the like from and have a smaller surface area than those of the respective light-emitting devices 40a described above. The respective light-emitting devices 41a of this example are rectangular in shape, extending in a second direction (direction y in the figure) orthogonal to the direction in which they are arranged (direction x in the figure). This light-emitting device array 41 is adjacently arranged to the light-emitting device array 40 in the second direction. The respective widths (lengths in the first direction) of the respective light-emitting devices 41a are one-fourth of the width (length in the first direction) of one adjacent light-emitting device 40a, and one-fifth of the width (length in the first direction) of one light-emitting device 40b or one light-emitting device 40c. Then, the light-emitting devices 41a are correspondingly disposed by fours to the respective light-emitting devices 40a inside the range of the widths thereof, and the light-emitting devices 41a are correspondingly disposed by fives to the respective light-emitting devices 40b and 40c inside the range of the widths thereof. Note that the number of divisions is not limited to the above since the light-emitting devices 41a only need to be divided into a plurality with respect to the light-emitting devices 40a, 40b, and 40c.

The light-emitting device array 42 comprises 30 light-emitting devices 42a arranged in the first direction. In the figure, only one light-emitting device 42a is representatively denoted with a reference numeral. These 30 light-emitting devices 42a are mutually equal in shape and surface area yet differ in shape and the like from and have a smaller surface area than those of the respective light-emitting devices 41a described above. The respective light-emitting devices 42a are square in shape. This light-emitting device array 42 is adjacently arranged to the light-emitting device array 41 in the second direction. The respective widths (lengths in the first direction) of the respective light-emitting devices 42a are one-fourth of the width (length in the first direction) of one adjacent light-emitting device 40a, and one-fifth of the width (length in the first direction) of one light-emitting device 40b or one light-emitting device 40c. Then, the respective light-emitting devices 42a are correspondingly disposed one-to-one with the respective light-emitting devices 41a of the adjacent light-emitting device array 41. Note that the light-emitting devices 42a are arranged in correspondence with the number of light-emitting devices 41a, and therefore the number of light-emitting devices is not limited to the above.

The light-emitting device array 43 comprises 23 parallelogram-shaped light-emitting devices 43a, seven isosceles triangle-shaped light-emitting devices 43b, and seven isosceles triangle-shaped light-emitting devices 43c arranged in the first direction. In the figure, only one light-emitting device 43a, light-emitting device 43b, and light-emitting device 43c are representatively denoted with reference numerals, respectively. This light-emitting device array 43 is adjacently arranged to the light-emitting device array 42 in the second direction. The 23 parallelogram-shaped light-emitting devices 43a are mutually equal in shape and surface area. Similarly, the seven isosceles triangle-shaped light-emitting devices 43b are mutually equal in shape and surface area, and the same holds true for the seven isosceles triangle-shaped light-emitting devices 43c as well. Specifically, in this light-emitting device array 43, one light-emitting device 43c, three or four light-emitting devices 43a, and one light-emitting device 43b are arranged from the right in the figure as a set and disposed inside the range of the width corresponding to one light-emitting device 40b. Next, one light-emitting device 43c, three light-emitting devices 43a, and one light-emitting device 43b are arranged from the right as a set and disposed inside the range of the width corresponding to one light-emitting device 40a. Such an arrangement is repeated with respect to the respective light-emitting devices 40a. Next, one light-emitting device 43c, four light-emitting devices 43a, and one light-emitting device 43b are arranged from the right as a set and disposed inside the range of the width corresponding to one light-emitting device 40c. Note that the light-emitting devices 43a, 43b, and 43c are arranged in correspondence with the number of light-emitting devices 42a, and therefore the number of light-emitting devices is not limited to the above.

The light-emitting device array 44 comprises 30 light-emitting devices 44a arranged in the first direction. In the figure, only one light-emitting device 44a is representatively denoted with a reference numeral. These 30 light-emitting devices 44a are mutually equal in shape and surface area. The respective light-emitting devices 44a are square in shape. This light-emitting device array 44 is adjacently arranged to the light-emitting device array 43 in the second direction. The respective widths (lengths in the first direction) of the respective light-emitting devices 44a are one-fourth of the width (length in the first direction) of one adjacent light-emitting device 40a, and one-fifth of the width (length in the first direction) of one light-emitting device 40b or one light-emitting device 40c. Then, the respective light-emitting devices 44a are correspondingly disposed one-to-one with the respective light-emitting devices 43a or 43c of the adjacent light-emitting device array 43. Note that the light-emitting devices 44a are arranged in correspondence with the number of the light-emitting devices 43a, 43b, and 43c and the widths of the light-emitting devices 40a, 40b, and 40c, and therefore the number of the light-emitting devices is not limited to the above.

Fig. 1B is a plan view showing a portion of the matrix LED of Fig. 1A, enlarged. As shown in the figure, the pair of diagonal angles of each of the parallelogram-shaped light-emitting devices 43a included in the light-emitting device array 43 is 45°. Then, the respective light-emitting devices 43a comprise two parallel sides in the first direction, with one side adjacent to one light-emitting device 42a and the other side adjacent to one light-emitting device 44a. The respective lengths of the two parallel sides in the first direction of the respective light-emitting devices 43a are substantially equal to the widths of the respective adjacent light-emitting devices 42a and 44a. On the other hand, the two base angles of each of the triangle-shaped light-emitting devices 43b and 43c included in the light-emitting device array 43 are 45°. When one light-emitting device 43b and one light-emitting device 43c are combined, the shape and surface area are substantially the same as those of one light-emitting device 43a. In other words, the combined result of one light-emitting device 43b and one light-emitting device 43c is a substitute for one light-emitting device 43a.

The matrix LED of this embodiment, for process convenience, is provided with a dividing line 45 at each width equivalent to four light-emitting devices 44a (that is, at each width equivalent to one light-emitting device 40a) or at each width equivalent to five light-emitting devices 44a (that is, at each width equivalent to one light-emitting device 40b) on both sides. Four or five light-emitting devices 44a are disposed inside each of the ranges between two dividing lines 45, with the light-emitting devices 43a correspondingly associated with three or four of these light-emitting devices 44a one by one, and one light-emitting device 43c correspondingly associated with the remaining one light-emitting device 44a. Similarly, four or five light-emitting devices 42a are disposed inside each of the ranges between two dividing lines 45, with the light-emitting devices 43a correspondingly associated with three or four of these light-emitting devices 42a one by one, and one light-emitting device 43b correspondingly associated with the remaining one light-emitting device 42a. Note that, on both sides of the matrix LED, the light-emitting devices 43a are correspondingly associated with four of the five light-emitting devices 44a one by one and one light-emitting device 43c is correspondingly associated with the remaining one light-emitting device 44a; and the light-emitting devices 43a are correspondingly associated with four of the five light-emitting devices 42a one by one and one light-emitting device 43b is correspondingly associated with the remaining one light-emitting device 42a.

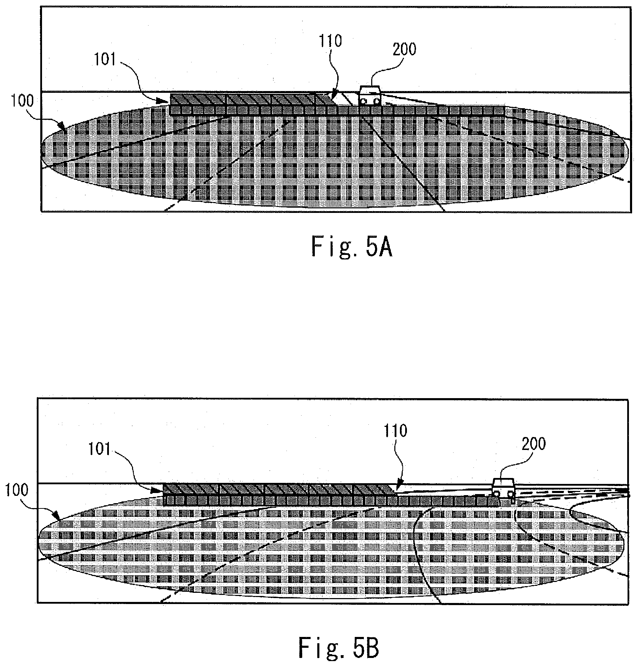

The vehicle headlamp is configured using this matrix LED, thereby making it possible to respectively achieve the AFS function and the ADB function. Specifically, the respective light-emitting devices of the matrix LED are selectively turned on and the emitted light thereof is projected in the space in front of the subject vehicle by a lens, making it possible to form irradiating light such as illustrated in Figs. 5A-5B, Figs. 6A-6B, and Figs. 7A-7B described later. Specifically, the light-emitting device arrays 40, 41, and 42 can be used to form a high beam that illuminates the relatively upper region of the space in front of the vehicle as well as a beam by ADB control. Specifically, the ADB function is achieved by selectively turning on and off the respective light-emitting devices 40a, 40b, 41a, and 42a included in the respective light-emitting device arrays, in accordance with the position where the forward vehicle exists.

Further, in the three adj acent light-emitting device arrays 40, 41, and 42 (refer to Fig.1A), the respectively included light-emitting devices are set so that the surface areas and widths thereof differ. The light emitted from these is projected by the lens, thereby causing the light from the light-emitting device array 40 to irradiate in the relatively upper region of the space in front of the subject vehicle, the light from the light-emitting device array 41 to irradiate in the lower area thereof, and the light from the light-emitting device array 42 to further irradiate in the lower area (refer to Figs. 5A-5B, Figs. 6A-6B, and Figs. 7A-7B described later). In thus achieving the ADB function, it is possible to achieve selective light irradiation by the light-emitting device array 42 where the surface area of the light-emitting units of the respective light-emitting devices is small in a region where light irradiation control at a high resolution is desired, and selective light irradiation by the light-emitting device arrays 40 and 41 where the surface area of the light-emitting units of the respective light-emitting devices is larger in a region where high resolution is not necessarily required. As a result, the number of light-emitting devices can be reduced while maintaining the required resolution for light irradiation control, making it possible to simplify the configuration of the apparatus that drives this matrix LED.

Further, the light-emitting device arrays 43 and 44 can be used to form a portion of the low beam that illuminates the relatively lower region of the space in front of the vehicle. Specifically, the low beam is formed by combining the light irradiated from the respective light-emitting device arrays 43 and 44 in the upper region of the light irradiated from other lamps and the like. At this time, the respective light-emitting devices 43a, 43b, and 43c included in the light-emitting device array 43 are selectively turned on and off in accordance with the travelling direction of the subject vehicle, making it possible to vary the position of the step area of the so-called cutoff line in the left-right direction. With this arrangement, an AFS function is achieved without using mechanical means. Note that while the above has described a light source apparatus that establishes both the ADB function and the AFS function, the AFS function may be separately and independently specialized from the ADB function by configuring the light source apparatus so that it comprises at least the light-emitting device array 43 only, or more preferably, further combines the light-emitting device array 43 with the light-emitting device array 44.

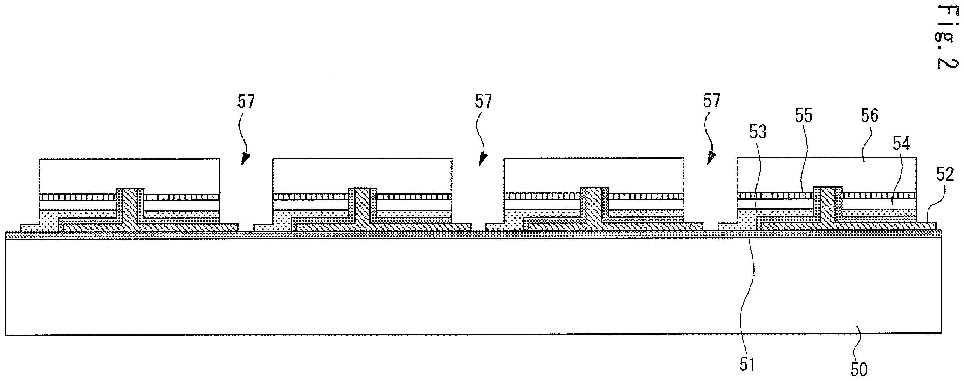

Fig. 2 is a schematic cross-sectional view showing a configuration example of the light-emitting devices included in the matrix LED. The figure shows the four light-emitting devices formed on one surface side of a support substrate 50. The support substrate 50 is a substrate comprising Si, Ge, AlN, SiC, Cu, Mo, W, and the like, for example. The respective light-emitting devices are configured to include an n-type electrode 52 and a p-type electrode 53 disposed on an insulating layer 51 made of SiO₂, SiN, and the like, a p-type GaN semiconductor layer 54 as a cladding layer layered on the p-type electrode 53, an InGaN semiconductor light-emitting layer 55 as an active layer layered on this p-type GaN semiconductor layer 54, and an n-type GaN semiconductor layer 56 as a cladding layer layered on this InGaN semiconductor light-emitting layer 55. The insulating layer 51 is sandwiched between the n-type electrode 52 and the p-type electrode 53, achieving electrical insulation. Further, the n-type electrode 52 passes through the p-type GaN semiconductor layer 54 and the InGaN semiconductor light-emitting layer 55, contacting the n-type GaN semiconductor layer 56. The insulating layer 51 is disposed between the p-type GaN semiconductor layer 54 and the InGaN semiconductor light-emitting layer 55, and the n-type electrode 52, achieving electrical insulation between both. A trench (groove) 57 for separating each is disposed between the respective light-emitting devices. According to the light-emitting devices of such a configuration example, it is possible to achieve a matrix LED comprising light-emitting units with various shapes and sizes such as shown in Fig. 1A described above.

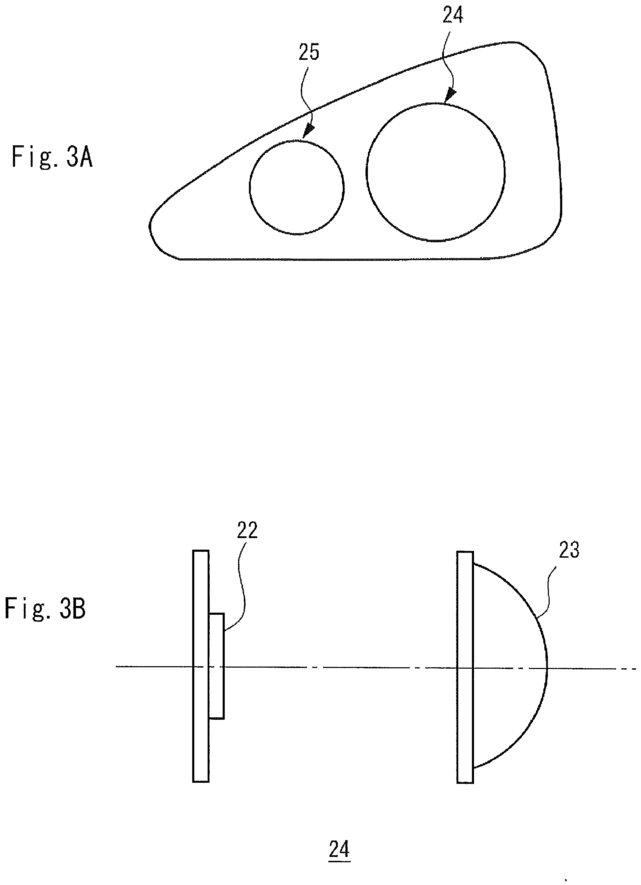

Fig. 3A is a schematic view showing a configuration example of the lamp unit. Further, Fig. 3B is a schematic view showing the optical configuration of the lamp unit disclosed in Fig. 3A. A lamp unit 20R (or 20L) shown in Fig. 3A comprises a high beam unit 24 for irradiating light on the relatively upper side of the space in front of the vehicle where the lamp unit 20R and the like are mounted, and a low beam unit 25 for irradiating light on the relatively lower side of the space in front of the vehicle. As shown in Fig. 3B, the high beam unit 24 comprises the matrix LED 22 described above and a lens 23 disposed on the front surface thereof, and forms a high beam by projecting the light emitted from the matrix LED 22 frontward by the lens 23. Note that while a detailed explanation of the configuration of the low beam unit 25 is omitted, various configurations such as a unit configured by combining an LED, lens, and the like, or a unit configured by combining a discharge bulb, shade, and the like, may be utilized.

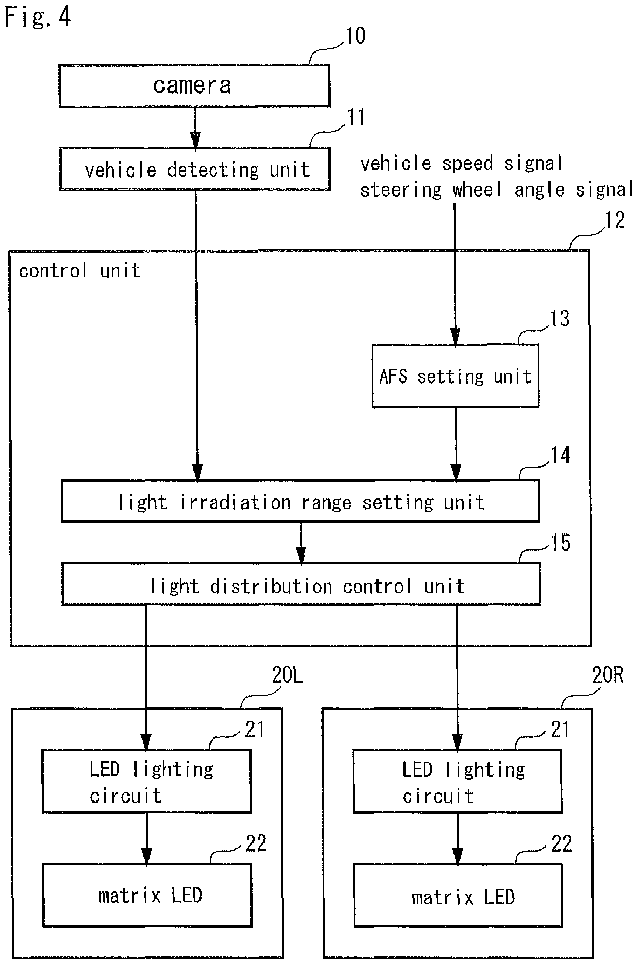

Fig. 4 is a block diagram showing the configuration of a vehicle headlamp system of an embodiment. The vehicle headlamp system shown in Fig. 4 sets a light distribution pattern based on an image obtained by taking an image of the space in front of the subject vehicle (target space) and irradiates light, and is configured to include a camera 10, a vehicle detecting unit 11, a control unit 12, and a pair of lamp units 20R and 20L.-Note that the vehicle detecting unit 11 and the control unit 12 are equivalent to the lighting control apparatus, and the respective lamp units 20R and 20L are equivalent to the vehicle headlamps.

The camera 10 is installed in a predetermined position of the subject vehicle (near the inner rearview mirror, for example), takes an image of the space in front of the vehicle, and outputs the image (image data).

The vehicle detecting unit 11 detects the position of the forward vehicle by performing predetermined image processing using the image data output from the camera 10, and outputs the position information to the control unit 12. The term "forward vehicle" here refers to a preceding vehicle or an oncoming vehicle. This vehicle detecting unit 11 is achieved by executing a predetermined operation program in a computer system comprising a CPU, ROM, RAM, and the like, for example. The vehicle detecting unit 11 is integrally configured with the camera 10, for example. Note that the function of the vehicle detecting unit 11 may be achieved in the control unit 12.

The control unit 12 is achieved by executing a predetermined operation program in a computer system comprising a CPU, ROM, RAM, and the like, for example, and comprises an AFS setting unit 13, a light irradiation range setting unit 14 and a light distribution control unit 15 as function blocks.

The AFS setting unit (ON target setting unit) 13 variably sets the position of the step area of the cutoff line formed near the upper end of the low beam irradiation range in the left-right direction in accordance with the turning direction of the subject vehicle, based on a vehicle speed signal (vehicle speed information) and a steering wheel angle signal (steering wheel angle information) obtained from the subject vehicle. Specifically, the AFS setting unit 13 sets the light-emitting devices to be turned on among the respective light-emitting devices included in the light-emitting device array 43.

The light irradiation range setting unit 14 sets the light irradiation range corresponding to the position of the forward vehicle detected by the vehicle detecting unit 11. Further, the light irradiation range setting unit 14 sets the light irradiation range corresponding to the cutoff line position set by the AFS setting unit 13. Specifically, the light irradiation range setting unit 14 sets the area where the forward vehicle exists as a light non-irradiation range, and all other areas as the light irradiation range. Further, the light irradiation range setting unit 14 sets the region further on the left side than this cutoff line as the light irradiation range and the region further on the right side as the light non-irradiation range, in correspondence with the cutoff line position set by the AFS setting unit 13.

The light distribution control unit 15 generates a light distribution control signal corresponding to the light distribution pattern based on the light irradiation range and non-irradiation range set by the light irradiation range setting unit 14, and outputs the light distribution control signal to the respective lamp units 20R and 20L.

The lamp unit 20R is installed on the front right side of the subject vehicle, and is used to irradiate light that illuminates the area in front of the subject vehicle, and comprises an LED lighting circuit 21 and a matrix LED 22. Similarly, the lamp unit 20L is installed on the front left side of the subject vehicle, and is used to irradiate light that illuminates the area in front of the subject vehicle, and comprises the LED lighting circuit 21 and the matrix LED 22.

The LED lighting circuit 21 selectively turns on the respective LEDs by supplying a drive signal to the plurality of LEDs (light-emitting diodes) included in the matrix LED 22, based on the control signal output from the light distribution control unit 15.

As shown in Fig.1A, the matrix LED 22 comprises a plurality of LEDs, and each of the plurality of LEDs is selectively turned on based on the drive signal supplied from the LED lighting circuit 21. This the matrix LED 22 is capable of individually turning on each of the plurality of LEDs and controlling the light intensity (brightness) thereof.

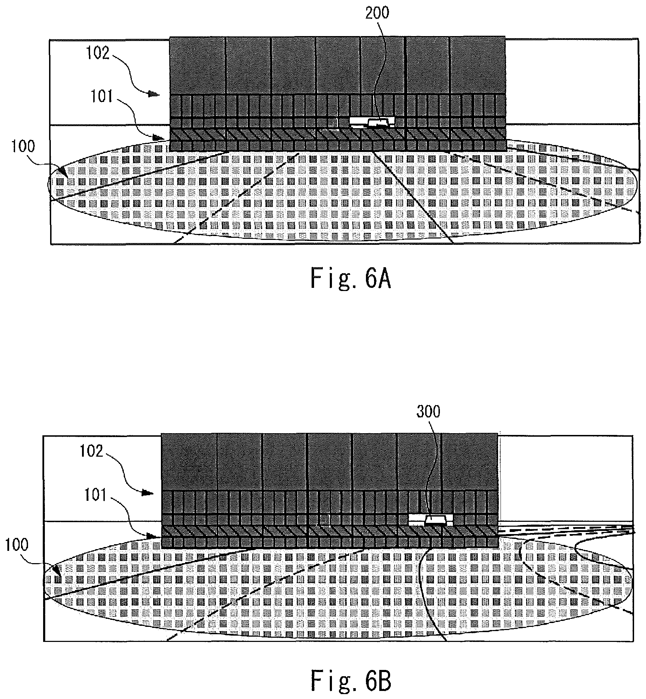

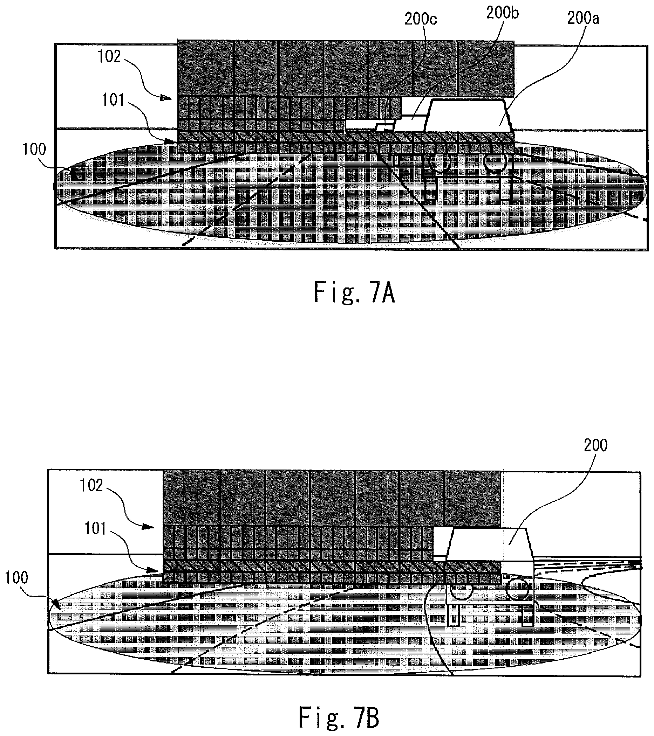

Fig. 5A and Fig. 5B are figures for explaining an example of a light distribution pattern formed by the vehicle headlamp system described above. Fig. 5A and Fig. 5B schematically show the state in front of the subject vehicle in a case where the subject vehicle is travelling on a road with two traffic lanes on one side and a forward vehicle 200 (oncoming vehicle in this example) exists in the opposite traffic lane (the same for Figs. 6A-6B and Figs. 7A-7B described later as well). The light distribution pattern shown in Fig. 5A comprises the low beam region 100 (the first irradiating light) formed by the respective low beam units 25 of the lamp units 20R and 20L, the cutoff region 101 (the second irradiating light) formed by the respective high beam units 24 of the lamp units 20R and 20L.

As shown in the figure, the cutoff region 101 is formed in the upper region of the low beam region 100 so that there is no space between the cutoff region 101 and the low beam region 100. Specifically, the cutoff region 101 is formed partially superimposed near the end area of the upper side of the low beam region 100, for example. A cutoff line with a relatively high left side and relatively low right side is formed on each side of the step area 110, on the upper side of the cutoff region 101. The height of this cutoff line is generally set so that the cutoff line is positioned lower than the upper side (generally the position of the windshield) of the forward vehicle 200. Note that, for ease of explanation, the high beam region is not shown.

As shown in Fig. 5A, the step area 110 of the cutoff line is disposed in the substantial center of the area in front of the subject vehicle during forward travelling. In contrast, as shown in Fig. 5B, when the subject vehicle is travelling on a curve that bends rightward, the step area 110 of the cutoff line is set in a position shifted further to the right side in accordance with the steering wheel angle. Note that, although not shown, when the subject vehicle is travelling on a curve that bends leftward, the step area 110 is set in a position shifted further to the left side in accordance with the steering wheel angle.

With such the step area 110 of the cutoff line variably set in accordance with the steering wheel angle, a state in which light irradiation is performed in the travelling direction of the subject vehicle is achieved. In particular, the respective light-emitting devices (refer to Fig. 1A) that contribute to the formation of the step area 110 of the cutoff line among the plurality of light-emitting devices of the matrix LED 22 are formed so as to comprise parallelogram-shaped light-emitting units with each of a pair of vertically opposite angles at 45° or isosceles triangle-shaped light-emitting units with two angles at a diagonal of 45°, thereby making it possible to directly generate a light irradiation line at a 45° angle in correspondence with the step area 110, without using a member such as a shade to shade the light. Further, the respective light-emitting devices of the light-emitting device array comprising the parallelogram-shaped or isosceles triangle-shaped light-emitting units are selectively caused to emit light, thereby making it possible to variably set the step area 110 of the cutoff line and thus achieve the AFS function without using mechanical components.

Fig. 6A and Fig. 6B are figures for explaining an example of a light distribution pattern formed by the vehicle headlamp system described above. The light distribution pattern shown in Fig. 6A comprises the low beam region 100 formed by the respective low beam units 25 of the lamp units 20R and 20L, the high beam region 102 formed by the respective high beam units 24 of the lamp units 20R and 20L, and the cutoff region 101 formed by the respective high beam units 24 of the lamp units 20R and 20L. Then, a portion of the high beam region 102 is set as the light non-irradiation range (shaded range) in accordance with the respective positions of a forward vehicle 200, which is an oncoming vehicle, or more specifically, a position in the upper region (generally the position of the windshield) of this forward vehicle 200. Similarly, according to the light distribution pattern shown in Fig. 6B, a portion of the high beam region 102 is set as the light non-irradiation range (shaded range) in accordance with the position of the preceding vehicle 300 driving on a curve that bends rightward, or more specifically, a position in the upper region (generally the position of the rear window) of this forward vehicle 300.

Fig. 7A and Fig. 7B are figures for explaining an example of a light distribution pattern formed by the vehicle headlamp system described above. The light distribution pattern shown in Fig. 7A comprises the low beam region 100 formed by the respective low beam units 25 of the lamp units 20R and 20L, the cutoff region 101 formed by the respective high beam units 24 of the lamp units 20R and 20L, and the high beam region 102 formed by the respective high beam units 24 of the lamp units 20R and 20L. Then, a portion of the high beam region 102 is set as the light non-irradiation range (shaded range) in accordance with the respective positions of three forward vehicles 200a, 200b, and 200c, which are oncoming vehicles, or more specifically, a position in the upper region (generally the position of the windshield) of these forward vehicles 200a, 200b, and 200c. Similarly, according to the light distribution pattern shown in Fig. 7B, a portion of the high beam region 102 is set as the light non-irradiation range (shaded range) in accordance with the position of the forward vehicle 200 that is travelling in the opposing traffic lane on a curve that bends rightward, or more specifically, a position in the upper region (generally the position of the windshield) of this forward vehicle 200.

Note that the present invention may be utilized with a double lamp type headlamp if the high beam unit 24 and the low beam unit 25 are incorporated into a single lamp unit. A high beam light distribution can be created if all high beam units 24 and low beam units 25 are turned on. Further, a low beam light distribution can be created if the cutoff line is formed by the light-emitting device arrays 43 and 44 of the high beam unit 24 and the low beam unit 25 is simultaneously irradiated.

Note that this invention is not limited to the subject matter of the foregoing embodiments, and can be implemented by being variously modified within the scope of the present invention as defined by the appended claims. For example, while the position information of a pedestrian and a forward vehicle is obtained by angles in the embodiments described above, the position information may be expressed by two-dimensional coordinates.

## Claims

1. A light source apparatus (22) incorporated and used in a vehicle headlamp, comprising:
a plurality of light-emitting device arrays (40, 41, 42, 43, 44), each extending in a first direction (x) and adjacently disposed in a second direction (y) that crosses the first direction, wherein:
said plurality of light-emitting device arrays (40, 41, 42, 43, 44) comprises a first light-emitting device array (40), a second light-emitting device array (41) and a third light-emitting device array (42),
each of the plurality of light-emitting device arrays (40, 41, 42, 43, 44) comprises a plurality of light-emitting devices (40a, 40b, 40c; 41a; 42a; 43a, 43b, 43c; 44a) arranged along the first direction (x) and is the same in length in the first direction (x), and
the number of the respective light-emitting devices (40a, 40b, 40c) of the first light-emitting device array (40) at one end in a second direction (y) among the plurality of light-emitting device arrays (40, 41, 42, 43, 44) is set smaller than the number of the respective light-emitting devices (41a) of the second light-emitting device array (41) adjacent to the first light-emitting device array (40), and the surface area and/or width in the first direction (x) of the light-emitting units of the respective light-emitting devices (40a, 40b, 40c) of the first light-emitting device array (40) is set larger than the surface area and/or width in the first direction (x) of the light-emitting units of the respective light-emitting devices (41a) of the second light-emitting device array (41) adjacent to the first light-emitting device array (40),
the surface area of the respective light-emitting units of the respective light-emitting devices (41a) of the second light-emitting device array (41) are set larger than the surface area of the respective light-emitting units (42a) of the third light-emitting device array (42) adjacent to the second light-emitting device array (41),
the respective light-emitting devices (41a) of the second light-emitting device array (41) and the respective light-emitting devices (42a) of the third light-emitting device array (42) have equally divided widths of the widths in the first direction (x) of the respective light-emitting devices (40a, 40b, 40c) of the first light-emitting device array (40) which is arranged adjacent to the second light-emitting device array (41) in the second direction (y),
the respective light-emitting devices (41a) of the second light-emitting device array (41) are disposed corresponding to the equally divided widths inside the range of the widths in the first direction of the respective light-emitting devices (40a, 40b, 40c) of the first light-emitting device array (40),
the respective light-emitting devices (42a) of the third light-emitting device array (42) are correspondingly disposed one-to-one with the respective light-emitting devices (41a) of the second light-emitting device array (41) which is adjacently arranged in the second direction (y),
the lengths in the second direction (y) of the respective light-emitting devices (40a, 40b, 40c) of the first light-emitting device array (40) are all equal and set larger than the lengths in the second direction (y) of the respective light-emitting devices (41a) of the second light-emitting device array (41),
the lengths in the second direction (y) of the respective light-emitting devices (41a) of the second light-emitting device array (41) are all equal and set larger than the lengths in the second direction (y) of the respective light-emitting devices (42a) of the third light-emitting device array (42), and
the lengths in the second direction (y) of the respective light-emitting devices (42a) of the third light-emitting device array (42) are all equal.

2. The light source apparatus according to claim 1,
wherein the surface area and/or the width in the first direction (x) of the light-emitting units of the light-emitting devices (40b, 40c) of one end and/or the other end in the first direction (x) among the respective light-emitting devices (40a, 40b, 40c) of the first light-emitting device array (40) are set larger than the surface area and/or width in the first direction (x) of the other respective light-emitting devices (40a).

3. The light source apparatus according to claim 1 or 2,
wherein the widths in the first direction (x) of the respective light-emitting devices (41a) of the second light-emitting device array (41) are all equal.

4. The light source apparatus according to any of the preceding claims,
wherein the respective light-emitting devices (43a, 43b, 43c) of a fourth light-emitting device array (43) on the other end side in the second direction (y) among the plurality of light-emitting device arrays (40, 41, 42, 43, 44) comprise an outer edge shape that includes an edge that obliquely crosses the first direction (x).

5. A vehicle headlamp (20R, 20L) comprising:
a light source apparatus (22) described in any of the preceding claims, and
a lens (23) that projects the light emitted from said light source apparatus (22).

6. A vehicle headlamp system that comprises the vehicle headlamp (20R, 20L) described in claim 5 and a lighting control unit (12) that controls the vehicle headlamp (20R, 20L),
wherein the lighting control unit (12) comprises:
a detecting unit (11) that detects a position of a forward vehicle based on an image of the area in front of the vehicle taken by a camera (10),
a light irradiation range setting unit (14) that sets the region that includes the forward vehicle as a light non-irradiation range and all other regions as a light irradiation range, based on the position of the forward vehicle, and
a light distribution control unit (15) that generates a control signal in accordance with the light irradiation range and the light non-irradiation range set by the light irradiation range setting unit (14), and outputs the control signal to the vehicle headlamp (20R, 20L).

## Patentansprüche

1. Eine Lichtquellenvorrichtung (22) eingebaut und verwendet in einer Fahrzeugscheinwerferlampe, wobei Folgendes vorgesehen ist:
eine Vielzahl von lichtemittierenden Vorrichtungsanordnungen (40, 41, 42, 43, 44), deren jede sich in einer ersten Richtung (x) erstreckt und zwar benachbart angeordnet in einer zweiten Richtung (y), die die erste Richtung kreuzt, wobei:
die erwähnte Vielzahl von lichtemittierenden Vorrichtungsanordnungen (40, 41, 42, 43, 44) eine erste lichtemittierende Vorrichtungsanordnung (40), eine zweite lichtemittierende Vorrichtungsanordnung (41) und eine dritte lichtemittierende Vorrichtungsanordnung (42) aufweist,
jede der Vielzahl von lichtemittierenden Vorrichtungsanordnungen (40, 41, 42, 43, 44) eine Vielzahl von lichtemittierenden Vorrichtungen (40a, 40b, 40c; 41a, 42a, 43a; 43b, 43c; 44a) aufweist, und zwar angeordnet entlang der ersten Richtung (x) und ist gleich in Länge in der ersten Richtung (x), und
die Anzahl der entsprechenden lichtemittierenden Vorrichtungen (40a, 40b, 40c) der ersten lichtemittierenden Vorrichtungsanordnung (40) an einem Ende in einer zweiten Richtung (y) unter der Vielzahl von lichtemittierenden Vorrichtungsanordnungen (40, 41, 42, 43, 44) kleiner eingestellt ist als die Anzahl der entsprechenden lichtemittierenden Vorrichtungen (41a) der zweiten lichtemittierenden Vorrichtungsanordnung (41) benachbart zu der ersten lichtemittierenden Vorrichtungsanordnung (40), und die Oberflächenfläche und/oder -breite in der ersten Richtung (x) der lichtemittierenden Einheiten der entsprechenden lichtemittierenden Vorrichtungen (40a, 40b, 40c) der ersten lichtemittierenden Vorrichtungsanordnung (40) größer eingestellt ist als die Oberflächenfläche und/oder -breite in der ersten Richtung (x) der lichtemittierenden Einheiten der entsprechenden lichtemittierenden Vorrichtungen (41a) der zweiten lichtemittierenden Vorrichtungsanordnung (41) benachbart zu der ersten lichtemittierenden Vorrichtungsanordnung (40),
die Oberflächenfläche der entsprechenden lichtemittierenden Einheiten der entsprechenden lichtemittierenden Vorrichtungen (41a) der zweiten lichtemittierenden Vorrichtungsanordnung (41) größer eingestellt ist als die Oberflächenfläche der entsprechenden lichtemittierenden Einheiten (42a) der dritten lichtemittierenden Vorrichtungsanordnung (42) benachbart zu der zweiten lichtemittierenden Vorrichtungsanordnung (41),
die entsprechenden lichtemittierenden Vorrichtungen (41a) der zweiten lichtemittierenden Vorrichtungsanordnung (41) und die entsprechenden lichtemittierenden Vorrichtungen (42a) der dritten lichtemittierenden Vorrichtungsanordnung (42) gleich geteilte Breiten der Breiten in der ersten Richtung (x) der entsprechenden lichtemittierenden Vorrichtungen (40a, 40b, 40c) der ersten lichtemittierenden Vorrichtungsanordnung (40) haben, welche angeordnet ist benachbart zu der zweiten lichtemittierenden Vorrichtungsanordnung (41) in der zweiten Richtung (y),
die entsprechenden lichtemittierenden Vorrichtungen (41a) der zweiten lichtemittierenden Vorrichtungsanordnung (41) angeordnet sind entsprechend den gleichermaßen geteilten Breiten innerhalb des Bereichs der Breiten in der ersten Richtung der entsprechenden lichtemittierenden Vorrichtungen (40a, 40b, 40c) der ersten lichtemittierenden Vorrichtungsanordnung (40),
die entsprechenden lichtemittierenden Vorrichtungen (42a) der dritten lichtemittierenden Vorrichtungsanordnung (42) Eins-zu-Eins angeordnet sind mit den entsprechenden lichtemittierenden Vorrichtungen (41a) der zweiten lichtemittierenden Vorrichtungsanordnung (41), die benachbart angeordnet ist in der zweiten Richtung (y),
die Längen in der zweiten Richtung (y) der entsprechenden lichtemittierenden Vorrichtung (40a, 40b, 40c) der ersten lichtemittierenden Vorrichtungsanordnung (40) alle gleich und größer eingestellt sind als die Längen in der zweiten Richtung der entsprechenden lichtemittierenden Vorrichtungen (41a) der zweiten lichtemittierenden Vorrichtungsanordnung (41),
die Längen in der zweiten Richtung (y) der entsprechenden lichtemittierenden Vorrichtungen (41a) der zweiten lichtemittierenden Vorrichtungsanordnung (41) alle gleich und größer eingestellt sind als die Längen in der zweiten Richtung (y) der entsprechenden lichtemittierenden Vorrichtungen (42a) der dritten lichtemittierenden Vorrichtungsanordnung (42), und
die Längen in der zweiten Richtung (y) der entsprechenden lichtemittierenden Vorrichtungen (42a) der dritten lichtemittierenden Vorrichtungsanordnung (42) alle gleich sind.

2. Die Lichtquellenvorrichtung nach Anspruch 1, wobei die Oberflächenfläche und/oder die Breite in der ersten Richtung (x) der lichtemittierenden Einheiten (40b, 40c) von einem Ende und/oder dem anderen Ende in der ersten Richtung (x) unter den entsprechenden lichtemittierenden Vorrichtungen (40a, 40b, 40c) der ersten lichtemittierenden Vorrichtungsanordnung (40) größer eingestellt sind als die Oberflächenfläche und/oder -breite in der ersten Richtung (x) der anderen entsprechenden lichtemittierenden Vorrichtungen (40a).

3. Die Lichtquellenvorrichtung nach Anspruch 1 oder 2, wobei die Breite in der ersten Richtung (x) der entsprechenden lichtemittierenden Vorrichtungen (41a) der zweiten lichtemittierenden Vorrichtungsanordnung (41) alle gleich sind.

4. Die Lichtquellenvorrichtung nach einem der vorhergehenden Ansprüche, wobei die entsprechenden lichtemittierenden Vorrichtungen (43a, 43b, 43c) einer vierten lichtemittierenden Vorrichtungsanordnung (43) an der anderen Endseite in der zweiten Richtung (y) unter der Vielzahl von lichtemittierenden Vorrichtungsanordnungen (40, 41, 42, 43, 44) eine Außenkantenform aufweist, die eine Kante aufweist, die die erste Richtung (x) schräg kreuzt.

5. Ein Fahrzeugscheinwerfer (20R, 20L), der Folgendes aufweist:
eine Lichtquellenvorrichtung (22) nach einem der vorhergehenden Ansprüche und eine Linse (23), die das von der erwähnten Lichtquellenvorrichtung (22) emittierte Licht projiziert.

6. Ein Fahrzeugscheinwerfersystem, welches einen Fahrzeugscheinwerfer (20R, 20L), beschrieben in Anspruch 5, und eine Beleuchtungssteuereinheit (12) aufweist, welche den Fahrzeugscheinwerfer (20R, 20L) steuert, wobei die Lichtsteuereinheit (12) Folgendes aufweist:
eine Detektionseinheit (11), die eine Position eines vorwärtsgerichteten Fahrzeugs detektiert, und zwar basierend auf einem Bild des Gebietes vor dem Fahrzeug aufgenommen durch eine Kamera (10),
wobei eine Lichtstrahlungsbereichseinstelleinheit (14) die Region einstellt, die das vorwärtsgerichtete Fahrzeug als einen Licht-Nichtbestrahlungsbereich umfasst und alle anderen Regionen als einen Lichtstrahlungsbereich, und zwar basierend auf der Position des vorwärtsgerichteten Fahrzeugs, und
eine Lichtverteilungssteuereinheit (15), die ein Steuersignal erzeugt entsprechend dem Lichtstrahlungsbereich und dem Licht-Nichtstrahlungsbereich eingestellt durch die Lichtstrahlungsbereichseinstelleinheit (14), und das Steuersignal an den Fahrzeugscheinwerfer (20R, 20L) ausgibt.

## Revendications

1. Appareil source de lumière (22) incorporé et utilisé dans un phare de véhicule, comprenant :
une pluralité de réseaux de dispositifs émetteurs de lumière (40, 41, 42, 43, 44), chacun s'étendant dans une première direction (x) et disposé de manière adjacente dans une deuxième direction (y) qui croise la première direction, dans lequel :
ladite pluralité de réseaux de dispositifs émetteurs de lumière (40, 41, 42, 43, 44) comprend un premier réseau de dispositifs émetteurs de lumière (40), un deuxième réseau de dispositifs émetteurs de lumière (41) et un troisième réseau de dispositifs émetteurs de lumière (42),
chacun des réseaux de dispositifs émetteurs de lumière (40, 41, 42, 43, 44) comprend une pluralité de dispositifs émetteurs de lumière (40a, 40b, 40c ; 41a ; 42a ; 43a, 43b, 43c ; 44a) disposés dans la première direction (x) et ayant sensiblement la même longueur dans la première direction (x), et
le nombre de dispositifs respectifs émetteurs de lumière (40a, 40b, 40c) du premier réseau de dispositifs émetteurs de lumière (40) au niveau d'une extrémité dans une deuxième direction (y) parmi la pluralité de réseaux de dispositifs émetteurs de lumière (40, 41, 42, 43, 44) est fixé plus petit que le nombre de dispositifs respectifs émetteurs de lumière (41a) du deuxième réseau (41) de dispositifs émetteurs de lumière adjacent au premier réseau (40) de dispositifs émetteurs de lumière, et la surface et/ou la largeur dans la première direction (x) des unités émettrices de lumière des dispositifs respectifs émetteurs de lumière (40a, 40b, 40c) du premier réseau (40) de dispositifs émetteurs de lumière est fixée supérieure à la surface et/ou la largeur dans la première direction (x) des unités émettrices de lumière des dispositifs respectifs émetteurs de lumière (41a) du deuxième réseau (41) de dispositifs émetteurs de lumière adjacent au premier réseau (40) de dispositifs émetteurs de lumière,
la surface des unités émettrices de lumière des dispositifs respectifs émetteurs de lumière (41a) du deuxième réseau (41) de dispositifs émetteurs de lumière est fixée supérieure à la surface des unités respectives émettrices de lumière (42a) du troisième réseau (42) de dispositifs émetteurs de lumière adjacent au deuxième réseau (41) de dispositifs émetteurs de lumière,
les dispositifs respectifs (41a) émetteurs de lumière du deuxième réseau (41) de dispositifs émetteurs de lumière et les dispositifs respectifs (42a) émetteurs de lumière du troisième réseau (42) de dispositifs émetteurs de lumière ont des largeurs également divisées des largeurs dans la première direction (x) des dispositifs émetteurs de lumière (40a, 40b, 40c) du premier réseau (40) de dispositifs émetteurs de lumière qui est disposé adjacent au deuxième réseau (41) de dispositifs émetteurs de lumière dans la deuxième direction (y),
les dispositifs respectifs (41a) émetteurs de lumière du deuxième réseau (41) de dispositifs émetteurs de lumière sont disposés de façon correspondante aux largeurs également divisées dans la plage des largeurs dans la première direction des dispositifs respectifs émetteurs de lumière (40a, 40b, 40c) du premier réseau (40) de dispositifs émetteurs de lumière,
les dispositifs respectifs (42a) émetteurs de lumière du troisième réseau (42) de dispositifs émetteurs de lumière sont disposés de façon correspondante face à face des dispositifs respectifs (41a) émetteurs de du deuxième réseau (41) de dispositifs émetteurs de lumière qui est disposé adjacent dans la deuxième direction (y),
les longueurs dans la deuxième direction (y) des dispositifs respectifs émetteurs de lumière (40a, 40b, 40c) du premier réseau (40) de dispositifs émetteurs de lumière sont toutes égales et fixées supérieures aux longueurs dans la deuxième direction (y) des dispositifs respectifs émetteurs de lumière (41a) du deuxième réseau (41) de dispositifs émetteurs de lumière,
les longueurs dans la deuxième direction (y) des dispositifs respectifs émetteurs de lumière (41a) du deuxième réseau (41) de dispositifs émetteurs de lumière sont toutes égales et fixées supérieures aux longueurs dans la deuxième direction (y) des dispositifs respectifs émetteurs de lumière (42a) du troisième réseau (42) de dispositifs émetteurs de lumière, et
les longueurs dans la deuxième direction (y) des dispositifs respectifs émetteurs de lumière (42a) du troisième réseau (42) de dispositifs émetteurs de lumière sont toutes égales.

2. Appareil source de lumière selon la revendication 1, dans lequel la surface et/ou la largeur dans la première direction (x) des unités émettrices de lumière des dispositifs émetteurs de lumière (40b, 40c) d'une extrémité et/ou de l'autre extrémité dans la première direction (x) parmi les dispositifs respectifs émetteurs de lumière (40a, 40b, 40c) du premier réseau (40) de dispositifs émetteurs de lumière est fixée supérieure à la surface et/ou la largeur dans la première direction (x) des autres dispositifs respectifs émetteurs de lumière (40a).

3. Appareil source de lumière selon la revendication 1 ou 2, dans lequel les largeurs dans la première direction (x) des dispositifs respectifs émetteurs de lumière (41a) du deuxième réseau (41) de dispositifs émetteurs de lumière sont toutes égales.

4. Appareil source de lumière selon l'une quelconque des revendications précédentes, dans lequel les dispositifs respectifs émetteurs de lumière (43a, 43b, 43c) d'un quatrième réseau (43) de dispositifs émetteurs de lumière du côté de l'autre extrémité dans la deuxième direction (y) parmi la pluralité de réseaux (40, 41, 42, 43, 44) de dispositifs émetteurs de lumière comprennent une forme de bord externe qui comporte un bord qui croise obliquement la première direction (x).

5. Phare de véhicule (20R, 20L) comprenant :
un appareil source de lumière (22) décrit dans l'une quelconque des revendications précédentes, et
une lentille (23) qui projette la lumière émise par ledit appareil source de lumière (22).

6. Système de phare de véhicule qui comprend le phare de véhicule (20R, 20L) décrit dans la revendication 5 et une unité de commande d'éclairage (12) qui commande le phare de véhicule (20R, 20L),
l'unité de commande d'éclairage (12) comprenant :
une unité de détection (11) qui détecte une position d'un véhicule avant sur la base d'une image de la zone à l'avant du véhicule prise par une caméra (10),
une unité de réglage du rayon d'irradiation lumineuse (14) qui fixe la région qui comprend le véhicule avant sous forme d'une zone sans irradiation lumineuse et toutes les autres régions sous forme d'une zone d'irradiation lumineuse, en fonction de la position du véhicule de devant, et
une unité de commande de répartition de la lumière (15) qui génère un signal de commande en fonction de la zone d'irradiation lumineuse et de la zone de non irradiation lumineuse fixées par l'unité de réglage de la plage d'irradiation lumineuse (14), et envoie le signal de commande au phare du véhicule (20R, 20L) .
